# EUROPÄISCHE PATENTSCHRIFT

(11) **EP 2 517 334 B1**
(45) Veröffentlichungstag und Bekanntmachung des Hinweises auf die Patenterteilung: **25.03.2015**
(21) Anmeldenummer: 10800716.2
(22) Anmeldetag: 15.12.2010
(51) Int. Cl.: H02K 1/27, H02K 1/28

(54) **ROTOR FÜR EINE ELEKTRISCHE MASCHINE**
ROTOR FOR AN ELECTRIC MACHINE
ROTOR POUR UN MOTEUR ÉLECTRIQUE

(30) Priorität: 21.12.2009 DE 102009055056; 14.12.2010 DE 102010063086
(43) Veröffentlichungstag der Anmeldung: 31.10.2012
(73) Patentinhaber: Robert Bosch GmbH, 70442 Stuttgart (DE)
(72) Erfinder: ZAMBOU DOUANGNI, Serge, Bertrand, 71701 Schwieberdingen (DE); HENGER, Martin, 71634 Ludwigsburg (DE)
(86) Internationale Anmeldenummer: PCT/EP2010/069712
(87) Internationale Veröffentlichungsnummer: WO 2011/085891

(56) Entgegenhaltungen:
- JP-A- 2003 032 930
- JP-A- 2004 248 443
- US-A1- 2010 026 128
- US-A1- 2010 117 475

## Beschreibung

### Stand der Technik

Die vorliegende Erfindung betrifft einen Rotor für eine elektrische Maschine.

Elektromaschinen als Elektromotoren oder als Generatoren werden für verschiedene technische Anwendungen eingesetzt. Die Elektromaschine umfasst dabei einen Rotor. Der Rotor besteht dabei aus einer Welle mit an der Welle angeordneten Lamellen. Die Lamellen sind dabei zu einem Lamellenpaket verbunden und in Taschen oder axialen Ausnehmungen des Lamellenpaketes sind Permanentmagnete angeordnet. Zur Verbindung des Lamellenpaketes mit der Welle bzw. einem Rotorträger sind verschiedene Fügeverfahren bekannt. Das Lamellenpaket wird dabei kraftschlüssig an der Welle befestigt, beispielsweise mit einem Presssitz. Zur Reduzierung einer Momentenwelligkeit werden die Permanentmagnete auf dem Lamellenpaket mit einem tangentialen Versatzwinkel zueinander auf der Welle befestigt. Außerdem können bei axial sehr langen Wellen Reduzierungen der Pressung zwischen dem Lamellenpaket und der Welle auftreten, weil bei einer kraftschlüssigen Verbindung eine in axialer Richtung lange Welle die auftretenden Kräfte nur mit großen Verformungen aufnehmen kann.

Aus der DE 10 2007 032 132 A1 ist ein Verfahren zur Befestigung eines Lamellenpaketes auf einem Rotorträger eines Rotors einer elektrischen Maschine bekannt. Dabei werden folgende Schritte ausgeführt: Herstellen von mindestens einer Materialaufwerfung auf der Mantelfläche des Rotorträgers und axiales Aufpressen oder Aufschrumpfen des Lamellenpaketes auf den Rotorträger, derart, dass sich die Materialaufwertung in das Lamellenpaket einschneidet.

JP 2 003 032 930 offenbart einen Rotor, bei dem Lamellenpakete mittels Formschlusselementen an der Welle befestigt sind. Vorteile der Erfindung

Der erfindungsgemäße Rotor mit den kennzeichnenden Merkmalen des Hauptanspruchs hat demgegenüber den Vorteil, dass der Rotor sehr einfach und kostengünstig herstellbar ist, indem die Lamellenpakete identisch ausgebildet und formschlüssig an der Rotorwelle befestigt sind, dass die Rotorwelle ein oder mehrere Formschlusselemente und jedes Lamellenpaket ein oder mehrere Gegenformschlusselemente aufweist, wobei die Anzahl der Gegenformschlusselemente eines Lamellenpakets jeweils größer ist als die Anzahl der Formschlusselemente der Rotorwelle und wobei jeweils zumindest eines der Gegenformschlusselemente eines Lamellenpakets mit zumindest einem Formschlusselement der Rotorwelle formschlüssig zusammenwirkt. Durch die erfindungsgemäße Ausführung ist ein Versatzwinkel zwischen den Lamellenpaketen auch bei einer formschlüssigen Verbindung zwischen den Lamellenpaketen und der Welle möglich, obwohl alle Lamellenpakete identisch ausgebildet sind. Weiterhin wird durch die formschlüssige Verbindung eine Aufweitung der Oberflächentoleranzen an Lamellenpaket und Rotorwelle im Vergleich zur kraftschlüssige Verbindung von Lamellenpaket und Rotorwelle ermöglicht.

Gemäß einer vorteilhaften Ausgestaltung ist vorgesehen, dass das zumindest eine Formschlusselement der Rotorwelle eine Nut und das zumindest eine Gegenformschlusselement ein vorstehender Steg ist oder umgekehrt.

Sehr vorteilhaft ist, wenn die Lamellenpakete derart auf der Rotorwelle angeordnet sind, dass sich an zumindest einer Umfangsposition in axialer Richtung gesehen fluchtende Gegenformschlusselemente ergeben, die eine durchgehend verlaufende Nut oder einen durchgehend verlaufenden Steg bilden. An dieser zumindest einen Umfangsposition besteht ein Formschluss zwischen der Rotorwelle und dem Rotor. An den übrigen Umfangspositionen erfolgt kein Eingriff der Formschlusselemente in die Gegenformschlusselemente oder umgekehrt und damit kein Formschluss.

Weiterhin vorteilhaft ist, wenn die Formschlusselemente der Rotorwelle in axialer Richtung über die Länge eines Lamellenpaketes hinaus verlaufen und mit mehreren Lamellenpaketen formschlüssig zusammenwirken, da die Lamellenpakete auf diese Weise sehr einfach auf die Rotorwelle aufschiebbar sind und mit dieser einen Formschluss eingehen.

Darüber hinaus vorteilhaft ist es, wenn das Lamellenpaket mehrere über den Umfang des Lamellenpaketes verteilte Magnettaschen zur Aufnahme von Permanentmagneten aufweist, wobei zwischen den Magnetpole, beispielsweise zwischen den Magnettaschen bzw. zwischen Paaren von Magnettaschen eines magnetischen Pols, ein vorbestimmter Winkel β vorgesehen ist.

Auch vorteilhaft ist, wenn die Anzahl der am Lamellenpaket vorgesehenen Gegenformschlusselemente größer ist als die Anzahl der Rotorpakete dividiert durch zwei und aufgerundet auf eine ganze Zahl.

Desweiteren vorteilhaft ist, wenn zwischen zwei benachbarten Gegenformschlusselementen eines Lamellenpaketes ein Winkel α vorgesehen ist, wobei sich der Winkel α ergibt aus der Formel α=N₁*β+N₂*δ. Dabei ist N₁ kleiner als die Polzahl der Elektromaschine, N₂ kleiner oder gleich der Anzahl an Gegenformschlusselementen. Der Schrägungswinkel δ entspricht dem in Umfangsrichtung gemessenen Versatz zweier benachbarter Lamellenpakete.

Nach einer vorteilhaften Ausgestaltung beträgt der Schrägungswinkel 8 weniger als zehn Grad.

Erfindungsgemäß ist wischen einer vorbestimmten Anzahl x von in Umfangsrichtung aufeinanderfolgenden Gegenformschlusselementen jeweils der Winkel α und daran anschließend ein vom Winkel α abweichender Winkel α_{R} vorgesehen da auf diese Weise eine Rotationssymmetrie des Lamellenpakets erreicht werden kann.

Erfindungsgemäß ergibt die vorbestimmte Anzahl x von benachbarten Winkeln α und der Winkel α_{R} zusammen addiert einen Winkel von 120 oder 180 Grad, da auf diese Weise eine Rotationssymmetrie des Lamellenpakets erreicht werden kann.

Außerdem vorteilhaft ist, wenn die Lamellenpakete in axialer Richtung hintereinander auf der Rotorwelle angeordnet sind, wobei die Formschlusselemente der Rotorwelle von Lamellenpaket zu Lamellenpaket mit anderen Gegenformschlusselementen zusammenwirken.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
Fig. 1 einen Längsschnitt einer Elektromaschine mit einem Rotor,
Fig. 2 einen Schnitt eines Lamellenpaketes senkrecht zu einer Rotationsachse,
Fig. 3 einen weiteren Schnitt des Lamellenpaketes gemäß Fig. 2 senkrecht zu der Rotationsachse,
Fig. 4 eine Schnitt des Rotors senkrecht zu der Rotationsachse,
Fig. 5 eine perspektivische Ansicht der Lamellenpakete und des Rotors und

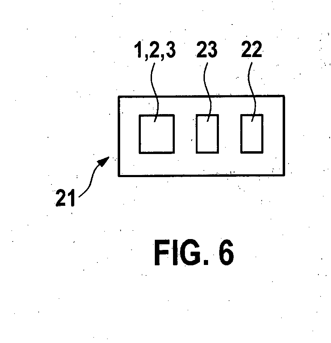

Fig. 6 eine stark vereinfachte Darstellung einer Hybridantriebseinrichtung.

### Ausführungsformen der Erfindung

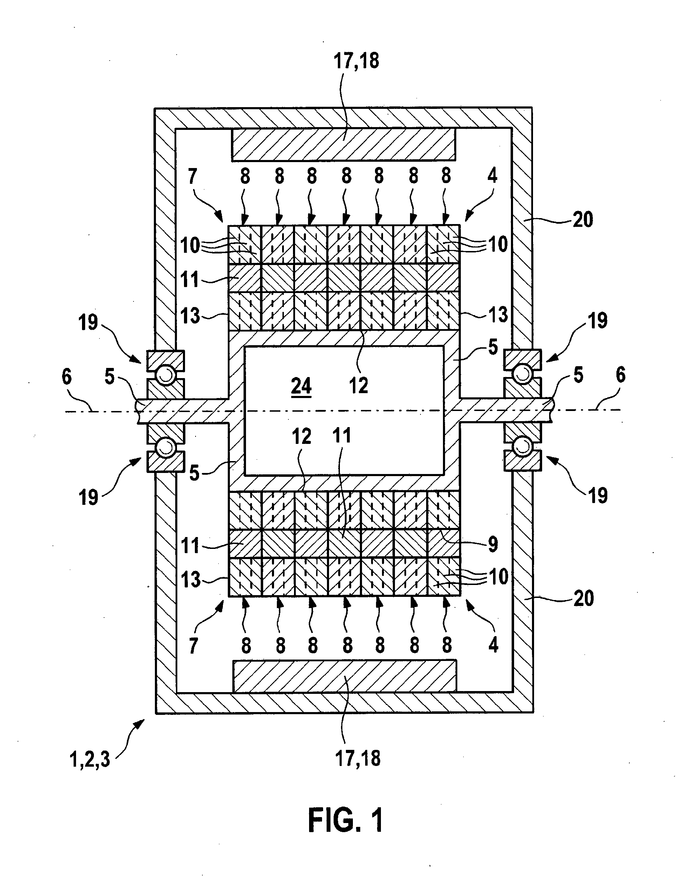

In Fig. 1 ist eine Elektromaschine 1 in einem Längsschnitt dargestellt. Die Elektromaschine 1. kann als Elektromotor 2 oder Generator 3 eingesetzt werden, beispielsweise in einer Hybridantriebseinrichtung 21 mit einer Batterie 22 und einem Verbrennungsmotor 23. Mittels der Batterie 22 kann die Elektromaschine 1 mit elektrischem Strom versorgt werden oder bei einer Rekuperation bei einem Einsatz der Hybridantriebseinrichtung 21 in einem nicht dargestellten Kraftfahrzeug kann mittels von der Elektromaschine 1 als Generator 3 erzeugter Strom die Batterie 22 aufgeladen werden.

Die Elektromaschine 1 umfasst einen Rotor 4 mit einer Rotationsachse 6 und einen Stator 17. Der Rotor 4 umfasst dabei eine Welle 5, an der mehrere Lamellenpakete 7,8 befestigt sind. In den Lamellenpaketen 7,8 sind Taschen 9 eingearbeitet, in denen Permanentmagnete 11 angeordnet sind. An der Welle 5 ist mittels einer Wälzlagerung 19 ein Gehäuse 20 befestigt. An dem Gehäuse 20 ist der Stator 17, an dem Elektromagnete 18, beispielsweise elektrische Spulen, befestigt sand. Die Welle 5 als Rotorträger ist in dem Bereich der Anordnung der Lamellenpakete 7,8 beispielsweise als Hohlwelle ausgebildet und weist somit einen Hohlraum 24 auf, d. h. stellt somit als Umformteil eine Topfform dar. Abweichend hiervon kann in einem nicht dargestellten Ausführungsbeispiel die Welle 5 im Bereich der Lamellenpakete 7,8 im Querschnitt H-förmig ausgebildet sein, so dass bezüglich dem in Fig. 1 dargestellten Ausführungsbeispiel ungefähr mittig in dem Hohlraum 24 eine Wandung ausgebildet ist, die senkrecht zu einer Rotationsachse 6 des Rotors 4 ausgebildet ist. Die Welle 5 kann aber selbstverständlich,auch eine Welle aus Vollmaterial sein.

Die Lamellenpakete 7,8 bestehen aus einzelnen Lamellen 10. Die Lamellen 10 sind dabei in Fig. 1 durch eine strichlierte Linie dargestellt. Die Lamellen 10 der Lamellenpakete 7,8 werden dabei beispielsweise mittels Schweißen oder Backlack zu den Lamellenpaketen 7,8 verbunden.

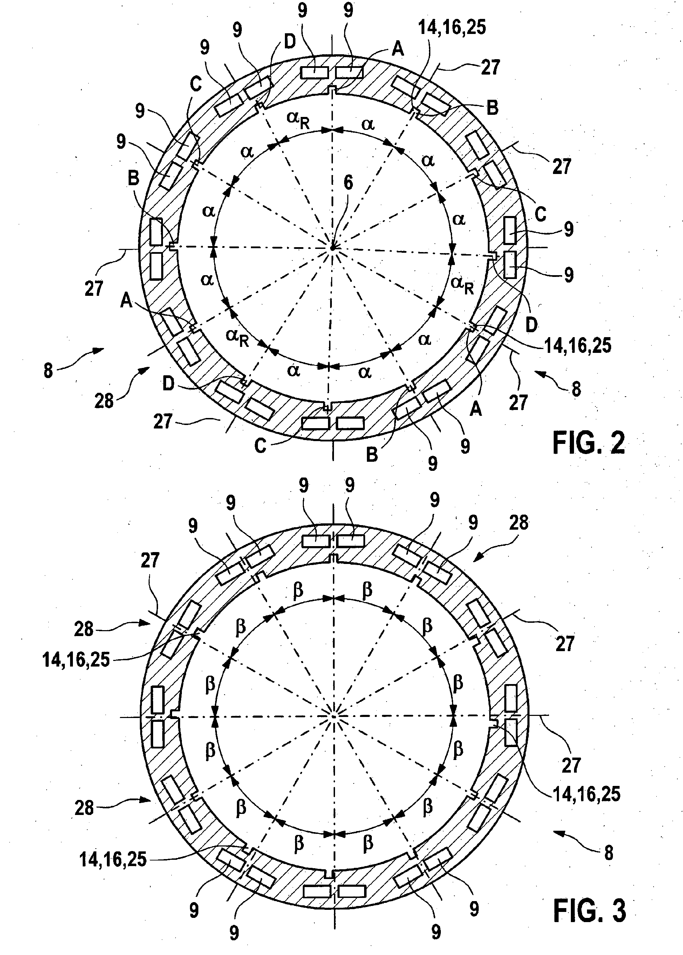

In Fig. 2 und 3 ist ein Schnitt eines Lamellenpaketes 7,8 senkrecht zu der Rotationsachse 6 des Rotors 4 dargestellt.

Die Lamellenpakete 7,8 sind derart an der Rotorwelle 5 befestigt, dass die Permanentmagnete jedes Lamellenpakets 7,8 jeweils einen in Umfangsrichtung des Rotors 4 gemessenen Versatz zu den Permanentmagneten 11 der benachbarten Lamellenpakete 7,8 aufweisen. Der Versatz wird auch als Schrägung bezeichnet.

Erfindungsgemäß ist vorgesehen, dass die Lamellenpakete 7,8 identisch ausgebildet und formschlüssig an der Rotorwelle 5 befestigt sind, dass die Rotorwelle 5 ein oder mehrere Formschlusselemente 15,16,26 und jedes Lamellenpakete 8 ein oder mehrere Gegenformschlusselemente 14,16,25 aufweist, wobei die Anzahl der Gegenformschlusselemente 14,16,25 eines Lamellenpakets 8 jeweils größer ist als die Anzahl der Formschlusselemente 15,16,26 der Rotorwelle 5 und wobei jeweils zumindest eines der Gegenformschlusselemente 14,16,25 eines Lamellenpaketes 8 mit dem zumindest einen Formschlusselement 15,16,26 der Rotorwelle 5 formschlüssig zusammenwirkt.

Das zumindest eine Formschlusselement 15,16,26 der Rotorwelle 5 kann dabei eine Nut und das zumindest eine Gegenformschlusselement 14,16,25 ein vorstehender Steg oder umgekehrt sein.

Die Lamellenpakete 7,8 sind derart auf der Rotorwelle 5 angeordnet, dass sich an zumindest einer Umfangsposition in axialer Richtung gesehen fluchtende Gegenformschlusselemente 14,16,25 ergeben, die eine durchgehend verlaufende Nut oder einen durchgehend verlaufenden Steg bilden.

Die Formschlusselemente 15,16,26 der Rotorwelle 5 verlaufen in axialer Richtung zumindest über die Länge eines Lamellenpaketes 8 hinaus und wirken mit mehreren Lamellenpaketen 7,8 formschlüssig zusammen.

Die Anzahl der jeweils am Lamellenpaket 8 vorgesehenen Gegenformschlusselemente 14,16,25 ist erfindungsgemäß größer als die Anzahl der Lamellenpakete 7,8 dividiert durch zwei, wobei der Wert auf eine ganze Zahl aufgerundet wird. Zwischen benachbarten Gegenformschlusselementen 14,16,25 eines Lamellenpakets 8 ist ein Winkel α vorgesehen. Die Anzahl der tatsächlich formschlüssig wirkenden Gegenformschlusselemente 14,16,25 pro Lamellenpaket 7,8 kann durch ein mehrfaches Einbringen der nach dieser Formel berechneten Anzahl der Gegenformschlusselemente 14,16,25 erhöht werden, indem die zusätzlichen Gegenformschlusselemente 14,16,25 bei gleichem Winkel α um einen vorbestimmten Winkel gegenüber den anderen Gegenformschlusselementen 14,16,25 in Umfangsrichtung versetzt im Lamellenpaket angeordnet sind.

Der Winkel α ergibt sich aus der Formel α=N₁*β+N₂*δ, wobei N₁ kleiner ist als die Polzahl der Elektromaschine, N₂ kleiner oder gleich der Anzahl an Gegenformschlusselementen 14,16,25 ist und wobei der Schrägungswinkel δ dem in Umfangsrichtung gemessenen Versatz zweier benachbarter Lamellenpakete 8 entspricht. Dabei ist der Schrägungswinkel δ kleiner als zehn Grad.

Zwischen einer vorbestimmten Anzahl n von in Umfangsrichtung aufeinanderfolgenden Gegenformschlusselementen 14,16,25 ist jeweils der Winkel α und daran anschließend ein vom Winkel α abweichender Winkel α_{R} vorgesehen. Die vorbestimmte Anzahl n von benachbarten Winkeln α und der Winkel α_{R} ergeben beispielsweise zusammen addiert einen Winkel von 120 oder 180 Grad.

Die erfindungsgemäß ausgebildeten Lamellenpakete 7,8 sind in axialer Richtung hintereinander auf der Rotorwelle 5 angeordnet, wobei das zumindest eine Formschlusselement 15,16,26 der Rotorwelle 5 von Lamellenpaket 8 zu Lamellenpaket 8 jeweils mit anderen Gegenformschlusselementen 14,16,25 zusammenwirken kann.

In die Lamellenpakete 7,8 sind gemäß dem Ausführungsbeispiel insgesamt zwölf Paare von Taschen 9 zur Aufnahme der Permanentmagnete 11 als Permanentmagnetpaare 28 eingearbeitet. Anstelle der zwölf Paare von Taschen 9 zur Aufnahme von Paaren von Permanentmagneten 11 können in analoger Weise (nicht dargestellt) auch zwölf Einzeltaschen 9 mit Permanentmagneten 11 an dem Lamellenpaket 7,8 ausgebildet sein. Die Anzahl der Taschen 9 oder die Anzahl der Paaren von Taschen ist aber selbstverständlich beliebig. Der tangentiale Winkel β (Fig. 3) zwischen den Taschen 9 bzw. den Paaren von Taschen 9 und den Permanentmagneten 11 bzw. Paaren von Permanentmagneten 11 (Permanentmagnete 11 sind in Fig. 2 und 3 nicht dargestellt) beträgt dabei 360° geteilt durch die Anzahl der Taschen 9 bzw. die Anzahl der Paare von Taschen 9. In diesem Ausführungsbeispiel beträgt somit der tangentiale Winkel β=30°. Die Paare von Taschen 9 sind dabei an dem Lamellenpaket 7,8 in Umfangsrichtung gleichmäßig verteilt. An dem Lamellenpaket 7,8 sind innenseitig als axiale Formschlussgeometrien 16 axiale Aussparungen 14 als axiale Nuten 25 vorhanden. Die Anzahl der axialen Nuten 25 ohne Wiederholung, d. h. vier Nuten 24, entspricht der maximalen Zahl der Lamellenpakete 8 an dem Rotor 4 ohne Verschwenkung (vier Einzellamellenpakete 8, siehe Beschreibung weiter unten) um eine Drehachse, die senkrecht zu der Rotationsachse 6 ist. Aufgrund der Anordnungszahl von drei weisen die Lamellenpakete 7,8 vier mal drei, d. h. zwölf Nuten 24 auf. Die axialen Nuten 25 sind dabei in Umfangsrichtung nicht gleichmäßig an dem Lamellenpaket 7,8 angeordnet. Der tangentiale Winkel α (Fig. 2) zwischen der in Fig. 2 ganz oben dargestellten axialen Nut 25 und der ersten nachfolgenden axialen Nut 25 zu der in Fig. 2 ganz oben dargestellten axialen Nut im Uhrzeigersinn beträgt dabei 31°. Dieser tangentiale Winkel α von 31° entspricht dabei dem tangentialen Winkel β zwischen den Taschen und einem tangentialen Versatzwinkel von 1° zwischen den Permanentmagneten 11 bei der Anordnung von mehreren Lamellenpaketen 7,8 auf dem Rotor 4 in der im Nachfolgenden noch zu beschreibenden Weise. In Fig. 2 ist mit A die oberste axiale Nut 25 bezeichnet und mit B die im Uhrzeigersinn als erste zur axialen Nut A ausgerichtete axiale Nut B. Auch die darauffolgenden axialen Nuten C und D weisen dabei zu der jeweils vorhergehenden axialen Nut 25 den tangentialen Winkel α von jeweils 31° auf. Zwischen C und D als axiale Nut 25 liegt somit auch beispielsweise der tangentiale Winkel α von 31° vor. Der gesamte tangentiale Winkel zwischen der in Fig. 2 ganz oben dargestellten axialen Nut A und der ersten axialen Nut A im Uhrzeigersinn von der obersten axialen Nut A beträgt dabei 120°. Aufgrund des tangentialen Winkels α jeweils zwischen den axialen Nuten A, B, C und D beträgt der tangentiale Restwinkel αR zwischen der axialen Nut D und A 27°. Diese Ausrichtung der axialen Nuten 25 wiederholt sich zweimal, so dass hier eine identische Anordnung jeweils an drei Bereichen mit einem tangentialen Winkel von 120° vorliegt, d. h. die Anordnungszahl der axialen Formschlussgeometrien 16 an den Einzellamellenpaketen 8 beträgt drei. An den Lamellenpaketen 7,8 ist radial außenseitig jeweils zentrisch an den Permanentmagneten 11 eine Markierung 27 ausgebildet. Die Geraden, welchen die tangentialen Winkel α, αR und β einschließen, gehen dabei jeweils immer durch die Rotationsachse 6 des Rotors 4 und zentrisch durch das zu bestimmende Bauteil bzw. die zu bestimmende Komponente, d. h. beispielsweise bei dem tangentialen Winkel α zwischen den Formschlussgeometrien 16 zentrisch durch die axiale Nut 25.

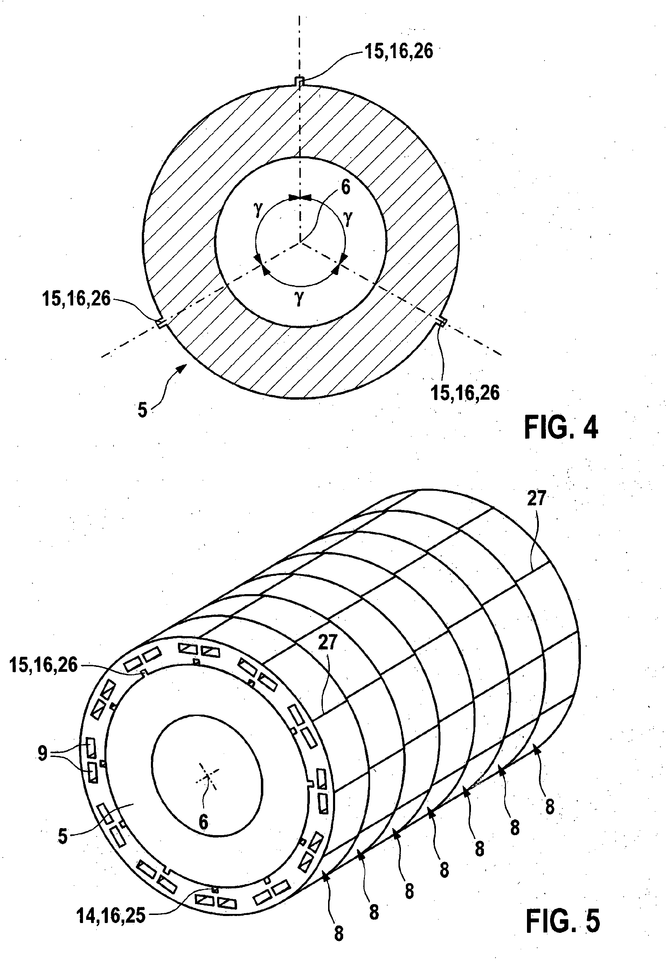

In Fig. 4 ist die Welle 5 dargestellt. Die Welle 5 weist außenseitig drei als axiale Vorsprünge 15 ausgebildete axiale Formschlussgeometrien 16. Die axialen Formschlussgeometrien 16 stellen dabei axiale Leisten 26 dar. Die axialen Leisten 26 sind dabei in Richtung der Rotationsachse 6 des Rotors 4 durchgehend ohne einen Versatz ausgebildet. Tangential betrachtet sind die axialen Leisten 26 gleichmäßig verteilt auf der Welle 5, so dass der tangentiale Winkel γ zwischen den Leisten 26 des Rotors 4 jeweils 120° beträgt.

In Fig. 5 ist eine perspektivische Ansicht der Welle 5 dargestellt, auf der die sieben Lamellenpakete 7,8 mittels der axialen Formschlussgeometrien 16 befestigt sind. Dabei greifen die axialen Leisten 26 in die axialen Nuten 25 der Lamellenpakete 8 ein. Das in Richtung der Rotationsachse 6 des Rotors 4 innerste Lamellenpaket 7,8 ist dabei dahingehend tangential befestigt, dass die drei axialen Leisten 26 der Welle 5 in die drei A Nuten 25 der Einzellamellenpakete eingreifen. Das nächste Lamellenpaket 7,8, das entsprechend der Darstellung der Fig. 5 weiter hinten an der Welle 5 befestigt ist bezüglich dem innersten Lamellenpaket 7,8 dabei dahingehend angeordnet, dass die drei axialen Leisten 26 der Welle 5 in die B axialen Nuten 25 der Lamellenpakete 7,8 eingreifen. Das wiederum nächste, d. h. bezüglich dem innersten Lamellenpaket 7,8 beide nach hinten ausgerichtete Lamellenpaket 7,8 ist dabei dahingehend an der Welle 5 befestigt, dass die drei axialen Leisten 26 der Welle 5 in die C Nuten 25 der Lammellenpakete 8 eingreifen und dass wiederum nächste und letzte Lamellenpaket 7,8 nach hinten, ist dahingehend angeordnet an Welle 5, dass die drei axialen Leisten 26 in die D axialen Nuten 25 der Lamellenpakete 8 eingreifen. Nach dem Aufbringen des innersten Lamellenpaketes 7,8 werden somit die eben beschriebenen nachfolgenden drei Lamellenpakete 7,8 jeweils bezüglich dem innersten Lamellenpaket 7,8 um zusätzliche 31° bezüglich der Rotationsachse 6 des Rotors 4 verdreht auf die Welle 5 aufgeschoben. Damit sind insgesamt vier Lamellenpakete 7,8 ohne Verschwenkung an dem Rotor 4 angeordnet. Die drei bezüglich der Darstellung in Fig. 5 nach vorne von dem innersten Lamellenpaket 8 angeordneten drei Lamellenpakete 7,8 werden dabei vor dem Aufschieben auf die Welle 5 bezüglich dem innersten Lamellenpaket 7,8 um 180° verdreht, so dass diese drei vorderen Lamellenpakete 7,8 spiegelbildlich bezüglich dem innersten Lamellenpaket 8 ausgerichtet sind. Dabei werden auch in analoger Weise zu den eben beschriebenen drei hinteren Lamellenpakete 7,8 nach dem innersten Lamellenpaket 7,8 bezüglich der Darstellung in Fig. 5 jeweils aufeinanderfolgend die Lamellenpakete 8 in den axialen Leisten 26 der Welle 5 jeweils aufeinanderfolgend in den B, C und D axialen Nuten 25 der Lamellenpakete 7,8 befestigt. Damit weisen die Permanentmagnete 11 in den sieben Lamellenpaketen 7,8 auf der Welle 5 jeweils einen tangentialen Versatzwinkel von 1° auf. Dieser Versatz ist außenseitig in der Fig. 5 sichtbar aufgrund der außenseitigen Markierungen 27 an den Lamellenpaketen 7,8.

Zum Aufbringen der Lamellenpakete 7,8 auf die Welle 5 weisen die Lamellenpakete 8 nicht dargestellte kleine axiale Bohrungen auf, mit denen ein Roboter die Lamellenpaket 7,8 greifen kann. Diese axialen und nicht dargestellten Bohrungen zum Greifen der Lamellenpakete 7,8 sind dabei an den Lamellenpaketen 7,8 dahingehend angeordnet, dass bei der Anordnung der Lamellenpakete 7,8 gemäß der Darstellung in Fig. 5 diese axialen Bohrungen durchgehend ausgebildet sind und nicht die durchgehende Verbindung aufgrund der axialen Bohrungen in den Lamellenpaketen 7,8 nicht wegen des Versatzes der Lamellenpakete 8 zueinander behindert ist. Damit kann ein Roboter sämtliche sieben Lamellenpakete 8 auf einmal mit den nicht dargestellten axialen Bohrungen greifen.

Abweichend von dem in Fig. 5 dargestellten Ausführungsbeispiel mit sieben Lamellenpaketen 7,8 an der Welle 5 kann auch eine andere Anzahl von Lamellenpaketen 7,8 auf der Welle 5 befestigt werden. Beispielsweise können zehn Lamellenpakete 7,8 auf der Welle 5 befestigt werden. Diese Lamellenpakete 8 weisen beispielsweise dreimal sechs axiale Nuten 25, d. h. insgesamt achtzehn Nuten 25 auf (nicht dargestellt).

Die im Wesentlichen ausschließlich formschlüssige tangentiale Verbindung zwischen der Welle 5 und den Lamellenpakete 7,8 besteht dabei in einem axialen Teilabschnitt 12 des Rotors 4 zwischen den an den axialen Enden 13 des Lamellenpaketes 7 angeordneten Lamellenpaket 7,8. In Fig. 1 sind dies somit die fünf Lamellenpakete 7,8, die nicht ein axiales Ende 13 des Lamellenpaketes 7 bilden. Die beiden Lamellenpakete 7,8, welche das axiale Ende 13 des Lamellenpaketes 7,8 bilden, sind zusätzlich zu der formschlüssige Verbindung auch kraft- und/oder stoffschlüssig mit der Lamelle 5 verbunden oder ausschließlich kraft- und/oder formschlüssig mit der Lamelle 5 verbunden. Diese kraft- und/oder formschlüssige Verbindung an den Lamellenpaketen 7,8 an den beiden axialen Enden 13 des Lamellenpaketes 7 ist erforderlich, damit das Lamellenpaket 7 auch axial der Welle 5 befestigt ist, weil die formschlüssige tangentiale Verbindung gemäß Fig. 1 und 2 keine axialen Kräfte übertragen kann. Die kraft- und/oder stoffschlüssige Verbindung im Bereich der axialen Enden 13 des Lamellenpaketes 7 wird beispielsweise mittels Schweißen, Löten, Pressen oder Verstemmen ausgeführt.

Abweichend von dem in den Fig. 1 bis 5 dargestellten Ausführungsbeispiel kann die Welle 5 nur eine axiale Formschlussgeometrie 16 aufweisen und als Folge davon weist der Rotor 4 keine Wiederholung der axialen Formschlussgeometrien 16 auf (Anordnungszahl ist somit eins), so dass der Rotor 4 bzw. die Lamellenpakete 8 nur vier Formschlussgeometrien 16 aufweisen (nicht dargestellt).

Vorzugsweise ist die Welle 5 aus Stahl hergestellt und die Lamellen 10 aus Eisen. Dabei sind die Lamellen 10 mit einer Isolierung umgeben (nicht dargestellt). Die Isolierung wird auf die Lamellen 10 aufgebracht, bevor diese zu den Lamellenpaketen 7,8 verbunden werden.

Insgesamt betrachtet sind mit dem erfindungsgemäßen Rotor 4 und dem erfindungsgemäßen Verfahren zur Herstellung des Rotors 4 für die erfindungsgemäße Elektromaschine 1 wesentliche Vorteile verbunden. Bei der Herstellung der Lamellenpakete 7,8 können diese in identischer Weise hergestellt werden. Zur Herstellung der Lamellenpakete 7,8 werden die Lamellen 10 miteinander verbunden und dies wird beispielsweise durch Ausstanzen ausgeführt. Aufgrund der Geometrie und Ausbildung der axialen Nuten 25 und der axialen Leisten 26 kann trotz der identischen Lamellenpakete 7,8 ein tangentialer, also in Umfangsrichtung gemessener, Versatzwinkel der Permanentmagnete 11 in den unterschiedlichen Lamellenpakete 7,8 erreicht werden, um die Momentenwelligkeit zu reduzieren. Damit ist auch bei einer formschlüssigen tangentialen Befestigung der Lamellenpakete 7,8 bei identischen und damit preiswert herzustellenden Lamellenpaket 7,8 ein tangentialer Winkelversatz zwischen den Permanentmagneten 11 in den Lamellenpaketen 8 möglich.

## Patentansprüche

1. Rotor (4) für eine Elektromaschine (1) zur Ausführung einer Rotationsbewegung um eine Rotationsachse (6), umfassend eine Rotorwelle (5), mehrere an der Rotorwelle (5) befestigte Lamellenpakete (8) und an den Lamellenpaketen (8) in Taschen vorgesehenen Permanentmagnete (11), wobei die Lamellenpakete (8) derart an der Rotorwelle (5) befestigt sind, dass die Permanentmagnete (11) jedes Lamellenpakets (8) jeweils einen in Umfangsrichtung des Rotors (4) gemessenen Versatz zu den Permanentmagneten (11) der benachbarten Lamellenpakete (8) aufweisen, wobei die Lamellenpakete (8) identisch ausgebildet und formschlüssig an der Rotorwelle (5) befestigt sind, dass die Rotorwelle (5) ein Formschlusselement (15,16,26) und jedes Lamellenpaket (8) ein oder mehrere Gegenformschlusselemente (14,16,25) aufweist, wobei die Anzahl der Gegenformschlusselemente (14,16,25) eines Lamellenpakets (8) jeweils größer ist als die Anzahl der Formschlusselemente (15,16,26) der Rotorwelle (5) und wobei jeweils zumindest eines der Gegenformschlusselemente (14,16,25) eines Lamellenpakets (8) mit dem zumindest einen Formschlusselement (15,16,26) der Rotorwelle (5) formschlüssig zusammenwirkt,
**dadurch gekennzeichnet, dass** die Rotorwelle (5).mehrere Formschlusselemente (15,16,26) aufweist und dass zwischen einer vorbestimmten Anzahl (n) von in Umfangsrichtung aufeinanderfolgenden Gegenformschlusselementen (14,16,25) jeweils der gleiche Winkel (α) vorgesehen ist, wobei diese benachbarten Gegenformschlusselemente (14,16,25) mit gleichem Winkelabstand (α) eine Anordnung von Gegenformschlusselementen (14,16,25) bildet, wobei mehrere dieser Anordnungen von Gegenformschlusselementen (14,16,25) in Umfangsrichtung aufeinanderfolgend angeordnet sind, zwischen denen jeweils ein vom Winkel (α) abweichender Winkel (α_{R}) vorgesehen ist, wobei die vorbestimmte Anzahl (n) von benachbarten Winkeln (α) und der Winkel (α_{R}) zusammen addiert einen Winkel von 120 oder 180 Grad ergeben.

2. Rotor nach Anspruch 1, **dadurch gekennzeichnet, dass** das zumindest eine Formschlusselement (15,16,26) der Rotorwelle (5) eine Nut und das zumindest eine Gegenformschlusselement (14,16,25) ein vorstehender Steg ist oder umgekehrt.

3. Rotor nach einem der vorhergehenden Ansprüche, **dadurch gekennzeichnet, dass** die Lamellenpakete (8) derart auf der Rotorwelle (5) angeordnet sind, dass sich an zumindest einer Umfangsposition in axialer Richtung gesehen fluchtende Gegenformschlusselemente (14,16,25) ergeben, die eine durchgehend verlaufende Nut oder einen durchgehend verlaufenden Steg bilden.

4. Rotor nach einem der vorhergehenden Ansprüche, **dadurch gekennzeichnet, dass** die Formschlusselemente (15,16,26) der Rotorwelle (5) in axialer Richtung über die Länge eines Lamellenpaketes (8) hinaus verlaufen und mit mehreren Lamellenpakete (8) formschlüssig zusammenwirken.

5. Rotor nach einem der vorhergehenden Ansprüche, **dadurch gekennzeichnet, dass** das Lamellenpaket (8) mehrere über den Umfang des Lamellenpaketes (8) verteilte Magnettaschen (9) zur Aufnahme jeweils eines Permanentmagneten (11) aufweist, wobei zwischen den Magnetpolen ein vorbestimmter Winkel (β) vorgesehen ist.

6. Rotor nach Anspruch 5, **dadurch gekennzeichnet, dass** die Anzahl der am Lamellenpaket (8) vorgesehenen Gegenformschlusselemente (14,16,25) größer ist als die Anzahl der Lamellenpakete (8) dividiert durch zwei und aufgerundet auf eine ganze Zahl.

7. Rotor nach Anspruch 6, **dadurch gekennzeichnet, dass** sich der Winkel (α) ergibt aus der Formel α=N₁*β+N₂*δ, wobei N₁ kleiner ist als die Polzahl der Elektromaschine, N₂ kleiner oder gleich der Anzahl an Gegenformschlusselementen (14,16,25) ist und wobei der Schrägungswinkel (δ) dem in Umfangsrichtung gemessenen Versatz zweier benachbarter Lamellenpakete (8) entspricht.

8. Rotor nach Anspruch 7, **dadurch gekennzeichnet, dass** der Schrägungswinkel (δ) kleiner als zehn Grad ist.

9. Rotor nach einem der vorhergehenden Ansprüche, **dadurch gekennzeichnet, dass** die Lamellenpakete (8) in axialer Richtung hintereinander auf der Rotorwelle (5) angeordnet sind, wobei die Formschlusselemente (15,16,26) der Rotorwelle (5) von Lamellenpaket (8) zu Lamellenpaket (8) mit anderen Gegenformschlusselementen (14,16,25) zusammenwirken.

10. Elektrische Maschine mit einem Rotor nach einem der vorhergehenden Ansprüche.

## Claims

1. Rotor (4) for an electrical machine (1) for executing a rotation movement about a rotation axis (6), comprising a rotor shaft (5), a plurality of laminated cores (8), which are fastened to the rotor shaft (5), and permanent magnets (11), which are provided on the laminated cores (8) in pockets, wherein the laminated cores (8) are fastened to the rotor shaft (5) in such a way that the permanent magnets (11) of each laminated core (8) each have an offset, which is measured in the circumferential direction of the rotor (4), in relation to the permanent magnets (11) of the adjacent laminated cores (8), wherein the laminated cores (8) are of identical design and are fastened to the rotor shaft (5) in an interlocking manner, wherein the rotor shaft (5) has an interlocking element (15, 16, 26) and each laminated core (8) has one or more mating interlocking elements (14, 16, 25), wherein the number of mating interlocking elements (14, 16, 25) of a laminated core (8) is in each case larger than the number of interlocking elements (15, 16, 26) of the rotor shaft (5), and wherein in each case at least one of the mating interlocking elements (14, 16, 25) of a laminated core (8) interacts in an interlocking manner with the at least one interlocking element (15, 16, 26) of the rotor shaft (5), **characterized in that** the rotor shaft (5) has a plurality of interlocking elements (15, 16, 26), and **in that** in each case the same angle (α) is provided between a predetermined number (n) of the mating interlocking elements (14, 16, 25) which follow one another in the circumferential direction, wherein these adjacent mating interlocking elements (14, 16, 25) with the same angular distance (α) form an arrangement of mating interlocking elements (14, 16, 25), wherein a plurality of these arrangements of mating interlocking elements (14, 16, 25) are arranged in succession in the circumferential direction, in each case an angle (α_{R}), which differs from the angle (α), being provided between said arrangements of mating interlocking elements, wherein the predetermined number (n) of adjacent angles (α) and the angle (α_{R}) added together form an angle of 120 or 180 degrees.

2. Rotor according to Claim 1, **characterized in that** the at least one interlocking element (15, 16, 26) of the rotor shaft (5) is a slot and the at least one mating interlocking element (14, 16, 25) is a protruding web, or vice versa.

3. Rotor according to either of the preceding claims, **characterized in that** the laminated cores (8) are arranged on the rotor shaft (5) in such a way that mating interlocking elements (14, 16, 25), which are aligned as seen in the axial direction, are produced in at least one circumferential position, the said mating interlocking elements forming a continuous slot or a continuous web.

4. Rotor according to one of the preceding claims, **characterized in that** the interlocking elements (15, 16, 26) of the rotor shaft (5) run beyond the length of a laminated core (8) in the axial direction and interact with a plurality of laminated cores (8) in an interlocking manner.

5. Rotor according to one of the preceding claims, **characterized in that** the laminated core (8) has a plurality of magnet pockets (9), which are distributed over the circumference of the laminated core (8), for receiving in each case one permanent magnet (11), wherein a predetermined angle (β) is provided between the magnet poles.

6. Rotor according to Claim 5, **characterized in that** the number of mating interlocking elements (14, 16, 25) which are provided on the laminated core (8) is greater than the number of laminated cores (8) divided by two and rounded up to an integer.

7. Rotor according to Claim 6, **characterized in that** the angle (α) is given by the formula α = N1*β + N₂*δ, where N₁ is less than the number of poles of the electrical machine, N₂ is less than or equal to the number of mating interlocking elements (14, 16, 25), and where the skew angle (δ) corresponds to the offset, which is measured in the circumferential direction, between two adjacent laminated cores (8).

8. Rotor according to Claim 7, **characterized in that** the skew angle (δ) is less than ten degrees.

9. Rotor according to one of the preceding claims, **characterized in that** the laminated cores (8) are arranged on the rotor shaft (5) one behind the other in the axial direction, wherein the interlocking elements (15, 16, 26) of the rotor shaft (5) interact with other mating interlocking elements (14, 16, 25) from laminated core (8) to laminated core (8).

10. Electrical machine having a rotor according to one of the preceding claims.

## Revendications

1. Rotor (4) pour une machine électrique (1), destiné à effectuer un mouvement de rotation autour d'un axe de rotation (6), comportant un arbre de rotor (5), plusieurs paquets de lamelles (8) fixés à l'arbre de rotor (5) et des aimants permanents (11) prévus dans des cavités sur les paquets de lamelles (8), les paquets de lamelles (8) étant fixés à l'arbre de rotor (5) de telle sorte que les aimants permanents (11) de chaque paquet de lamelles (8) présentent à chaque fois un décalage, mesuré dans la direction périphérique du rotor (4), par rapport aux aimants permanents (11) des paquets de lamelles adjacents (8), les paquets de lamelles (8) étant réalisés de manière identique et étant fixés à l'arbre de rotor (5) par engagement par complémentarité de formes, l'arbre de rotor (5) comprenant un élément d'engagement par complémentarité de formes (15, 16, 26) et chaque paquet de lamelles (8) comprenant un ou plusieurs éléments conjugués d'engagement par complémentarité de formes (14, 16, 25), le nombre des éléments conjugués d'engagement par complémentarité de formes (14, 16, 25) d'un paquet de lamelles (8) étant à chaque fois supérieur au nombre des éléments d'engagement par complémentarité de formes (15, 16, 26) de l'arbre de rotor (5), et au moins l'un des éléments conjugués d'engagement par complémentarité de formes (14, 16, 25) d'un paquet de lamelles (8) coopérant par engagement par complémentarité de formes à chaque fois avec l'au moins un élément d'engagement par complémentarité de formes (15, 16, 26) de l'arbre de rotor (5),
**caractérisé en ce que** l'arbre de rotor (5) comprend plusieurs éléments d'engagement par complémentarité de formes (15, 16, 26), et **en ce que** le même angle (α) est à chaque fois prévu entre un nombre prédéfini (n) d'éléments conjugués d'engagement par complémentarité de formes (14, 16, 25) successifs dans la direction périphérique, ces éléments conjugués d'engagement par complémentarité de formes adjacents (14, 16, 25) de même écart angulaire (α) formant un agencement d'éléments conjugués d'engagement par complémentarité de formes (14, 16, 25), plusieurs de ces agencements d'éléments conjugués d'engagement par complémentarité de formes (14, 16, 25) étant disposés successivement dans la direction périphérique, entre lesquels est prévu à chaque fois un angle (α_{R}) différant de l'angle (α), le nombre prédéfini (n) d'angles adjacents (α) et l'angle (α_{R}) s'additionnant pour donner un angle de 120 ou 180 degrés.

2. Rotor selon la revendication 1, **caractérisé en ce qu'**au moins un élément d'engagement par complémentarité de formes (15, 16, 26) de l'arbre de rotor (5) est une rainure et l'au moins un élément conjugué d'engagement par complémentarité de formes (14, 16, 25) est une nervure saillante, ou inversement.

3. Rotor selon l'une quelconque des revendications précédentes, **caractérisé en ce que** les paquets de lamelles (8) sont disposés sur l'arbre de rotor (5) de telle sorte qu'il en résulte des éléments conjugués d'engagement par complémentarité de formes (14, 16, 25) en alignement vus dans la direction axiale en au moins une position périphérique, lesquels forment une rainure s'étendant de manière continue ou une nervure s'étendant de manière continue.

4. Rotor selon l'une quelconque des revendications précédentes, **caractérisé en ce que** les éléments d'engagement par complémentarité de formes (15, 16, 26) de l'arbre de rotor (5) s'étendent au-delà de la longueur d'un paquet de lamelles (8) dans la direction axiale et coopèrent par engagement par complémentarité de formes avec plusieurs paquets de lamelles (8).

5. Rotor selon l'une quelconque des revendications précédentes, **caractérisé en ce que** le paquet de lamelles (8) comprend plusieurs cavités pour aimants (9) réparties sur la périphérie du paquet de lamelles (8) pour recevoir à chaque fois un aimant permanent (11), un angle prédéfini (β) étant prévu entre les pôles magnétiques.

6. Rotor selon la revendication 5, **caractérisé en ce que** le nombre des éléments conjugués d'engagement par complémentarité de formes (14, 16, 25) prévus sur le paquet de lamelles (8) est supérieur au nombre des paquets de lamelles (8) divisé par deux et arrondi à un nombre entier.

7. Rotor selon la revendication 6, **caractérisé en ce que** l'angle (α) résulte de la formule α = N₁*β + N₂*5, dans laquelle N₁ est inférieur au nombre de pôles de la machine électrique, N₂ est inférieur ou égal au nombre d'éléments conjugués d'engagement par complémentarité de formes (14, 16, 25) et dans laquelle l'angle d'obliquité (δ) correspond au décalage, mesuré dans la direction périphérique, de deux paquets de lamelles adjacents (8).

8. Rotor selon la revendication 7, **caractérisé en ce que** l'angle d'obliquité (δ) est inférieur à dix degrés.

9. Rotor selon l'une quelconque des revendications précédentes, **caractérisé en ce que** les paquets de lamelles (8) sont disposés sur l'arbre de rotor (5) les uns derrière les autres dans la direction axiale, les éléments d'engagement par complémentarité de formes (15, 16, 26) de l'arbre de rotor (5) coopérant, d'un paquet de lamelles (8) à un autre paquet de lamelles (8), avec d'autres éléments conjugués d'engagement par complémentarité de formes (14, 16, 25).

10. Machine électrique comprenant un rotor selon l'une quelconque des revendications précédentes.
